# EUROPÄISCHE PATENTSCHRIFT

(11) **EP 3 444 538 B1**
(45) Veröffentlichungstag und Bekanntmachung des Hinweises auf die Patenterteilung: **18.12.2019**
(21) Anmeldenummer: 18188751.4
(22) Anmeldetag: 13.08.2018
(51) Int. Cl.: F24H 9/02, F24D 19/00, F24F 5/00, F24F 12/00, E04F 19/08, F24H 9/06, F24F 7/00

(54) **HAUSTECHNIKZENTRALE**
TECHNICAL DOMESTIC INSTALLATION
INSTALLATION TECHNIQUE DOMESTIQUE

(30) Priorität: 17.08.2017 DE 102017118744
(43) Veröffentlichungstag der Anmeldung: 20.02.2019
(73) Patentinhaber: Schinagl, Alfons, 4192 Schenkenfelden (AT)
(72) Erfinder: Schinagl, Alfons, 4192 Schenkenfelden (AT)
(74) Vertreter: Müller, Jochen

(56) Entgegenhaltungen:
- DE-A1- 19 717 655
- DE-A1- 19 803 154
- FR-A1- 2 971 530

## Beschreibung

Die Erfindung bezieht sich auf eine Haustechnikzentrale, die mindestens jeweils ein vorgefertigtes Haustechnik-Heizungsmodul und ein Haustechnik-Sanitärmodul umfasst, das jeweils aus Eckprofilen und horizontalen Montageprofilen, die mindestens zwei der Eckprofile miteinander verbinden, sowie umfangsseitigen Verkleidungselementen zusammengesetzt ist, wobei die Eckprofile jeweils endseitig mit Befestigungselementen zur Festlegung auf einem Boden und an einer Decke eines Gebäudes bestückt sind, wobei die Eckprofile und/oder die Befestigungselemente zur Längenänderung teleskopierbar und die Verkleidungselemente entweder teleskopierbar oder in ihrer Höhenlage veränderbar angeordnet sind und wobei mindestens eines der Montageprofile mit einem Regenwassermanager, der mindestens zwei Einlässe und mindestens einen Auslass aufweist, und einer Vorrichtung zur Wohnraumlüftung bestückt ist.

Haustechnik-Module, die auch als Verteilerschränke bezeichnet werden, sind sowohl als Haustechnik-Heizungsmodul als auch als Haustechnik-Sanitärmodul allgemein bekannt. Sie werden üblicherweise in Wände eines Gebäudes eingelassen oder an Wänden befestigt und dienen zur Aufnahme von Installationselementen eines Typs von Haustechnik, wobei die einzelnen Typen nach der Verwendungsart der Installationskomponenten unterschieden werden, also beispielsweise Komponenten für die Heizungsinstallation, die Elektroinstallation, die Lüftungsinstallation oder die Wasser-/Abwasserinstallation (Sanitär).

Die EP 1 462 734 A1 offenbart eine Haustechnikzentrale, die als industriell vorgefertigtes Haustechnik-Modul für Heizung und Sanitär ausgebildet ist. Das Haustechnik-Modul ist einerseits unmittelbar an die Hausanschlüsse für Wasser, Strom und/oder Gas anschließbar und weist andererseits normierte Schraubverbindungsanschlüsse einer einzigen Rohrdimensionierung für einen Wasserkreislauf und für einen Heizungskreislauf auf.

Im Weiteren zeigt die DE 197 17 655 A1 ein Haustechnik-Modul für Gebäude zur Aufnahme von Installationselementen, mit zwei Seitenelementen, einer Rückwand und zumindest einer Frontblende, die zusammen einen Installationsraum begrenzen. Das Haustechnik-Modul kennzeichnet sich dadurch, dass der Installationsraum mittels eines ersten Trennelements in zwei Installationsbereiche aufgetrennt ist, wobei in einem Bereich die Installationselemente eines Typs und im anderen Bereich die Installationselemente eines anderen Typs aufgenommen sind.

Weitere Haustechnik-Module sind aus der FR 2 971 530 B1, der DE 198 03 154 A1 und der DE 197 17 655 A1 bekannt. Dokument FR 2 971 530 B1 offenbart eine Haustechnikzentrale gemäß dem Oberbegriff des Anspruchs 1.

Der Erfindung liegt die Aufgabe zugrunde, eine Haustechnikzentrale mit mindestens einem Haustechnik-Heizungsmodul und einem Haustechnik-Sanitärmodul der eingangs genannten Art zu schaffen, die an unterschiedliche Einbausituationen und technische Anforderungen, insbesondere bezüglich der Hausinstallation. anpassbar ist.

Erfindungsgemäß wird die Aufgabe durch die Merkmale des unabhängigen Anspruchs gelöst.

Die Unteransprüche stellen vorteilhafte Ausgestaltungen der Erfindung dar.

Eine Haustechnikzentrale, umfasst mindestens jeweils ein vorgefertigtes Haustechnik-Heizungsmodul und ein Haustechnik-Sanitärmodul, das jeweils aus Eckprofilen und horizontalen Montageprofilen, die mindestens zwei der Eckprofile miteinander verbinden, sowie umfangsseitigen Verkleidungselementen zusammengesetzt ist, wobei die Eckprofile jeweils endseitig mit Befestigungselementen zur Festlegung auf einem Boden und an einer Decke eines Gebäudes bestückt sind, wobei die Eckprofile und/oder die Befestigungselemente zur Längenänderung teleskopierbar und die Verkleidungselemente entweder teleskopierbar oder in ihrer Höhenlage veränderbar angeordnet sind und wobei mindestens eines der Montageprofile mit einem Regenwassermanager, der mindestens zwei Einlässe und mindestens einen Auslass aufweist, und einer Vorrichtung zur Wohnraumlüftung bestückt ist. Die Haustechnikzentrale umfasst eine Wärmequelle und eine Zisterne für Regenwasser. Die Vorrichtung zur Wohnraumlüftung umfasst einen von einem Wasser-Strom und dem Zuluft-Strom durchströmten Wärmetauscher, wobei der Wasser-Strom zur Erwärmung der Zuluft mit der Wärmequelle und zur Kühlung der Zuluft mit dem Regenwassermanager und dem Regenwasser der Zisterne gekoppelt ist.

Selbstverständlich sind dem Haustechnik-Heizungsmodul in üblicher weise eine Wärmequelle, beispielsweise in Form eines Gas- oder Ölbrenners oder einer Wärmepumpenanlage oder dergleichen, und ein Warmwasserspeicher zugeordnet, um zum einen einen Heizkreislauf und zum anderen einen Warmwasserkreislauf eines Gebäudes anforderungsgerecht mit Warmwasser zu bedienen. In das Haustechnik-Sanitärmodul mündet ein mit einem Absperrhahn versehender Hauswasser-Anschluss, der mit einem in dem Haustechnik-Sanitärmodul an einem Montageprofil installierten Wasserzähler gekoppelt ist.

Durch die teleskopierbaren Eckschienen bzw. die Befestigungselemente sind die Haustechnikmodule, wie das Haustechnik-Heizungsmodul und das Haustechnik-Sanitärmodul im Folgenden einzeln oder gemeinsam auch bezeichnet werden, insbesondere im Zusammenhang mit übereinstimmenden Merkmalen, in ihrer Länge veränderbar und an unterschiedliche Geschosshöhen eines Gebäudes anpassbar. Mittels der Befestigungselemente werden die Eckschienen in vorbestimmten Abständen, die vorzugsweise durch die Länger der horizontalen Montageprofile bestimmt sind, auf einem Rohfußboden und an der Geschossdecke festgelegt. Nachdem die Verkleidungselemente montiert sind, ist sämtliche in den Haustechnikmodulen installierten Elemente von außen nicht mehr sichtbar. Hierbei ist es selbstverständlich möglich, das Haustechnik-Sanitärmodul mit dem Haustechnik-Heizungsmodul zu kombinieren, und zwar derart, dass zwischen dem beiden Haustechnikmodulen keine Verkleidungselemente vorhanden sind, um beispielsweise Rohrleitungen von dem Haustechnik-Sanitärmodul zu dem Haustechnik-Heizungsmodul zu führen und die Installation zu vereinfachen. Um neben der besonderen Eigenart bezüglich des gebäudeseitigen Einbaus auch eine besondere Nutzungsmöglichkeit zur Verfügung zu stellen, ist in dem Haustechnik-Sanitärmodul ein Regenwassermanager vorhanden dessen einer Einlass mit einer Zisterne und dessen anderer Einlass mit einem mit dem Hauswasser-Anschluss verbundenen Leitungswasseranschluss und dessen Auslass mit einem Brauchwasseranschluss, beispielsweise zur Spülwasserversorgung von Toiletten, gekoppelt ist. Der Regenwassermanager stellt eine an einer Montageschiene befestigte und werkseitig vormontierte kompakte Zentraleinheit zur automatischen Steuerung und Wasserversorgung von Regenwassernutzungsanlagen in dem Gebäude dar und umfasst eine mit einer Schalteinrichtung gekoppelte Wasserpumpe, wobei eine an die Schalteinrichtung und an eine der Zisterne zugeordnete Füllstandsüberwachungseinrichtung angeschlossene elektronische Steuereinheit, die mit mindestens einem Mehrwegeventil zusammenwirkt, vorgesehen ist, um wahlweise mittels der Pumpe der Zisterne oder von dem Leitungswasseranschluss Wasser zu entnehmen und an dem Brauchwasseranschluss betriebssicher bereitzustellen.

Zur Beheizung oder Kühlung des Gebäudes umfasst die Vorrichtung zur Wohnraumlüftung den von dem Wasser-Strom und dem Zuluft-Strom durchströmten Wärmetauscher. Der Wasser-Strom ist zur Erwärmung der Zuluft mit einer der Wärmequellen und zur Kühlung der Zuluft mit dem Regenwassermanager und dem Regenwasser der Zisterne gekoppelt.

Zur kontrollierten Wohnraumraumlüftung kann zusätzlich zu dem Regenwassermanager oder alternativ zu dem Regenwassermanager eine und/oder einer Vorrichtung zur Wohnraumlüftung an mindestens einem der Montageprofile innerhalb des Haustechnik-Sanitärmoduls angeordnet sein, wobei die Vorrichtung zur Wohnraumlüftung selbstverständlich mit entsprechenden Zuluft- und Abluft-Rohren gekoppelt ist und in Abhängigkeit beispielsweise von Umluftströmungskreisen, in denen Luft mehr oder weniger zirkuliert, oder Frischluft- oder Abluftströmungskreisen, in denen Frischluft zugeführt oder Luft abgesaugt wird, eine entsprechende Anzahl von Lüftern aufweist.

Damit die Haustechnikzentrale vor äußeren Einflüssen abgeschirmt ist, umfasst zweckmäßigerweise das der Decke des Gebäudes zugeordnete Verkleidungselement ein Deckenanschlusselement. Somit ist ein Eindringen insbesondere von Staub in das Innere der Haustechnikzentrale vermieden. Selbstverständlich können die den Fertigfußboden und der Decke zugeordneten Verkleidungselemente randseitige Dichtlippen oder dergleichen aufweisen, um Unebenheiten auszugleichen und einen abgedichteten Anschluss bereitzustellen und/oder entsprechend verstellbar ausgebildet sein.

Im Weiteren sind zumindest einzelne Verkleidungselemente von den zugeordneten Eckprofilen lösbar und/oder weisen eine Klappe auf, um eine Wartungsöffnung bereitzustellen. Die Verkleidungselemente, die beispielsweise aus lackiertem Blech bestehen können, sind mit entsprechenden Einhängungen versehen, die mit den gelochten Eckschienen lösbar zusammenwirken können.

Zur Wärmerückgewinnung und damit zur Energieeinsparung umfasst bevorzugt die Vorrichtung zur Wohnraumlüftung mindestens einen Lüfter und mindestens einen von einem Abluft-Strom und einem Zuluft-Strom durchströmten Wärmetauscher. In dem Wärmetauscher wird dem Abluft-Strom, der üblicherweise erwärmte Luft aus dem Inneren des Gebäudes leitet, Wärme entzogen und dem Frischluftstrom, der der Luft von außen in das Innere des Gebäudes leitet, zugeführt.

Da eine Haustechnikzentrale häufig in einem Raum des Gebäudes installiert wird, der sich zur Aufstellung weiterer technischer Haushaltsgeräte eignet, weist das Haustechnik-Sanitärmodul mindestens einen Zulauf zum Anschluss einer Waschmaschine und einen Ablauf zum Anschluss einer Waschmaschine und/oder eines Wäschetrockners auf. Der Zulauf und der oder die Abläufe sind werkseitig an entsprechenden Montageschienen im Inneren des Haustechnik-Sanitärmoduls zuverlässig befestigt, so dass baustellenseitig keine Installationsarbeiten anfallen und bei einer Installation einer Waschmaschine bzw. eines Wäschetrockners lediglich die geräteseitig vorhandenen Schläuche durch entsprechende Öffnungen in den Verkleidungselementen zu führen und mit den Zu- und Abläufen zu koppeln sind.

Vorzugsweise ist das Haustechnik-Sanitärmodul mit dem Haustechnik-Heizungsmodul gekoppelt, in dem ein mit mindestens einer Wärmequelle verbundener Warmwasserspeicher anordenbar ist, der mit mindestens einem Wasseranschluss des Haustechnik-Sanitärmoduls zu verbinden ist. Die Wärmequelle ist beispielsweise als eine Gastherme, eine Wärmepumpe und/oder eine Solaranlage ausgebildet.

Damit insbesondere die Steuerung der Wärmequelle bedarfsweise anpassbar ist und auch Messwerte, beispielsweise Temperaturen betreffend abrufbar sind, umfasst das Haustechnik-Heizungsmodul ein rechnergestütztes Steuerungsmodul, das mit der Wärmequelle zusammenwirkt, wobei das Steuerungsmodul mit mindestens einem außerhalb des Haustechnik-Moduls angeordneten Bedienmodul gekoppelt ist. Demnach ist kein unmittelbarer Zugang zur Wärmequelle oder dem Steuerungsmodul erforderlich, um beispielsweise Zeiten für die Bereitstellung von Warmwasser oder Betriebszeiten der Heizung oder entsprechende Vorlauftemperaturen, Heizkurven oder dergleichen einzustellen, da dies am dem Bedienmodul erfolgt, das mit dem Steuerungsmodul verbunden oder verbindbar ist.

In Ausgestaltung ist das Bedienmodul als ein Tablet-Computer, Smartphone oder dergleichen ausgebildet und kommuniziert über eine Drahtlosschnittstelle mit dem Steuerungsmodul. Das Bedienmodul und/oder das Steuerungsmodul ist in eine Haussteuerung einbindbar, mit der sich beispielsweise auch Türen ver- und entriegeln, Rollläden öffnen und schließen, Überwachungseinrichtungen abfragen lassen und dergleichen. Solche Haussteuerungen sind unter dem Begriff "SmartHome" bekannt.

Um einen Warmwasserbrauch abrechnungsgerecht erfassen zu können, was insbesondere in einem Mehrfamilienhaus notwendig ist, umfasst das Haustechnik-Sanitärmodul mehrere mit Warmwasserleitungen verbundene Wärmemengenzähler. Die die Wärmemengenzähler sind unmittelbar ablesbar oder zur Fernablesung über das Internet oder zur Ablesung an dem Steuerungsmodul und/oder dem Bedienmodul ausgebildet. Zur Kopplung mit einer Abrechnungszentrale über das Internet oder mit dem Bedienmodul und/oder dem Steuerungsmodul über ein lokales Heim-Netzwerk zur Ablesung von Daten sind die Wärmemengenzähler, die sowohl Trink-/Brauchwasserleitungen als auch Heizkreisen, die jeweils Warmwasser führen, zugeordnet sein können, mit entsprechenden Schnittstellen zu Datenübertragung ausgestattet.

Zum individuellen Heizen bzw. Steuern von Raumtemperaturen sowie zum Betreiben unterschiedlicher Wärmesenken, also Heizeinrichtungen bzw. Heizungselementen, weist das Haustechnik-Sanitärmodul mehrere Heizkreisanschlüsse, auf, die zum einen mit der Wärmequelle und zum anderen mit Heizungselementen verbindbar sind. Sonach ist es beispielsweise möglich, an einem Heizkreisanschluss Fußbodenheizungen, insbesondere für verschiedene Räume, und an einem anderen Heizkreisanschluss Radiatoren zu betreiben, an denen vorzugsweise unterschiedliche Vorlauftemperaturen anliegen.

Vorzugsweise umfassen die Heizkreisanschlüsse temperaturgesteuerte Ventile, an denen eine Soll-Schalttemperatur einstellbar ist. Zweckmäßigerweise ist die Soll-Schalttemperatur an dem mit den Ventilen gekoppelten Bedienmodul einstellbar. Sonach lässt sich beispielsweise eine gewünschte Raumtemperatur, die in Zusammenhang mit der Soll-Schalttemperatur steht, an einem Smartphone eingeben.

Nach einer Weiterbildung umfasst das Haustechnik-Sanitärmodul Anschlüsse zu Kopplung eines Sonnenkollektors mit einem Solarmodul und dem Warmwasserspeicher. Zweckmäßigerweise ist das Solarmodul mit dem Bedienmodul koppelbar. An den Bedienmodul, beispielsweise einem Tablet-Computer, lassen sich Temperaturen abrufen, die in einem mit dem Solarmodul gekoppelten Vorlauf herrschen, so dass Rückschlüsse über die Leistung der Solaranlage möglich sind.

Durch die zuvor erläuterte Haustechnikzentrale, die um eine Haustechnik-Elektromodul mit mindestens einem Stromzähler und Sicherungen erweiterbar ist, wird die üblicherweise in einem Wohngebäude verwendete technische Installation von Heizungs-, Sanitär- und/oder Elektrokomponenten mit einem relativ geringen Platzbedarf bereitgestellt, wobei sämtliche in der Haustechnikzentrale vorhandenen Installationskomponenten werksseitig vormontiert sind, so dass baustellenseitig der Montageaufwand auf ein Minimum reduziert ist. Durch die Rohre und Armaturen aufnehmende Haustechnikzentrale ist kein separater Technikraum mehr notwendig. Die Haustechnikzentrale lässt sich beispielsweise in einem Hauswirtschaftraum unterbringen, wodurch sich Baukosten bzw. Raumkosten reduzieren lassen.

Es versteht sich, dass die vorstehend genannten und nachstehend noch zu erläuternden Merkmale nicht nur in der jeweils angegebenen Kombination, sondern auch in anderen Kombinationen verwendbar sind. Der Rahmen der Erfindung ist nur durch die Ansprüche definiert.

Die Erfindung wird im Folgenden anhand eines Ausführungsbeispiels unter Bezugnahme auf die zugehörige Zeichnung näher erläutert.

Es zeigt:

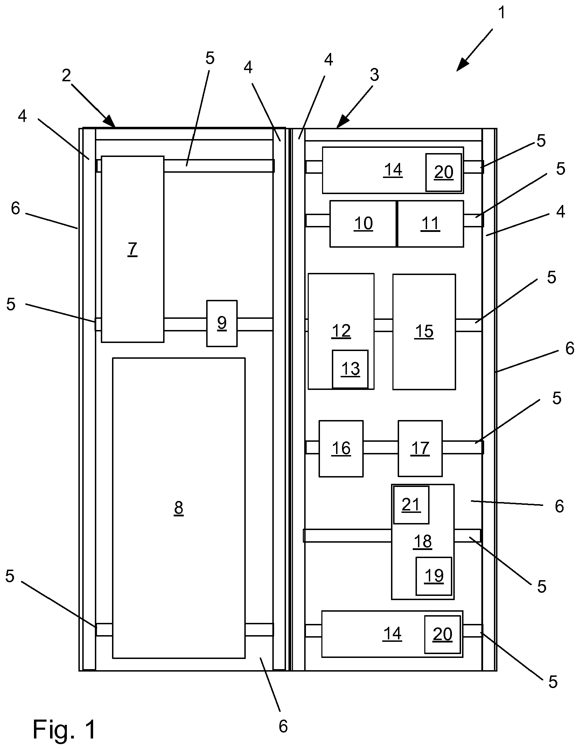

- Fig. 1: eine schematische Darstellung einer Haustechnikzentrale nach der Erfindung

Eine Haustechnikzentrale 1 umfasst mindestens ein werkseitig vorgefertigtes Haustechnik-Heizungsmodul 2 und ein werkseitig vorgefertigtes Haustechnik-Sanitärmodul 3. Die werkseitige Vorfertigung umfasst die Anordnung und den Anschluss aller Komponenten, die der Benutzer in dem Haustechnik-Heizungsmodul 2 und dem Haustechnik-Sanitärmodul 3 wünscht, so dass baustellenseitig lediglich gegebenenfalls die beiden Module miteinander und mit bauseitigen Anschlüssen zu koppeln sind, wodurch sich die Montagezeit vor Ort gegenüber einer konventionellen Installation wesentlich verkürzt und eine hohe Qualität insbesondere hinsichtlich den Anordnung der Komponenten und der Dichtheit der Verbindungen gegeben ist.

In dem vorliegenden Ausführungsbeispiel ist auf die Darstellung standardmäßig vorhandener Komponenten sowie der Leitungsführungen verzichtet, um die Übersichtlichkeit zu gewährleisten.

Das Haustechnik-Heizungsmodul 2 und das Haustechnik-Sanitärmodul 3 weist gehäuseseitig einen im Wesentlichen gleichen Aufbau auf, bei dem vertikale Eckprofile 4 und horizontalen Montageprofile 5 vorgesehen sind, wobei Montageprofile 5 mit jeweils zwei der Eckprofile 4 verbunden sind. Außenseitig ist an den Eckprofilen 4 eine Verkleidung angebracht, die aus Verkleidungselementen 6 zusammengesetzt ist.

Zur Befestigung sind die Eckprofile 4 jeweils endseitig mit Befestigungselementen zur Festlegung auf einem Boden und an einer Decke eines Gebäudes bestückt, Damit eine Anpassung an unterschiedliche Geschosshöhen möglich ist, sind die Eckprofile 4 teleskopierbar und/oder die Befestigungselemente sind in den Eckprofilen 4 verlagerbar angeordnet. Darüber hinaus ist mindestens eines der Verkleidungselemente 6 entweder teleskopierbar gestaltet oder in seiner Höhenlage veränderbar angeordnet. Das unmittelbar zur Decke benachbarte Verkleidungselement 6 ist mit einem Deckenanschlusselement, das beispielsweise aus einem elastischen Werkstoff gefertigt sein kann, bestückt, das einen Unebenheiten ausgleichenden Übergang zur Geschossdecke ermöglicht.

Die Verkleidungselemente 6 sind zumindest teilweise von den Eckprofilen abnehmbar oder weisen verschließbare Öffnungen auf, um Installations- und Wartungsarbeiten durchführen zu können.

Das Haustechnik-Heizungsmodul 2 ist mit einer beispielsweise als ein Gasbrenner ausgebildeten Wärmequelle 7 bestückt, die mit einem ebenfalls in dem Haustechnik-Heizungsmodul 2 untergebrachten Warmwasserspeicher 8 gekoppelt ist. Zur Steuerung der Wärmequelle 7 umfasst das Haustechnik-Heizungsmodul 2 ein rechnergestütztes Steuerungsmodul 9, das zum einen Bedienelemente und/oder Anzeigeeinrichtungen, beispielsweise auch einen Touchscreen, aufweist und zum anderen mit mindestens einem außerhalb des Haustechnik-Moduls 2 angeordneten Bedienmodul gekoppelt ist, das als ein Tablet-Computer, Smartphone oder dergleichen ausgebildet ist und über eine Drahtlosschnittstelle mit dem Steuerungsmodul 9 kommuniziert. Das Bedienmodul und/oder das Steuerungsmodul 9 kann Bestandteil einer Hausautomatisierungseinrichtung sein, mit der weitere Komponenten in einem Gebäude steuerbar und/oder Überwachungseinrichtungen abrufbar sind, insbesondere über ein Netzwerk, beispielsweise ein Heim-Netzwerk oder das Internet.

Die Wärmequelle 7 und der Warmwasserspeicher 8 sind mit dem Haustechnik-Sanitärmodul 3 verbunden, das einen Hauswasser-Anschluss 10 mit einem zugeordneten Wasserzähler 11 umfasst, wobei der Hauswasser-Anschluss 10 in bekannter Weise mit einem Warmwasserkreislauf und einem Kaltwasserkreislauf gekoppelt ist, gegebenenfalls unter Verwendung von Wasserfiltern, Wasserenthärtungsanlagen; Wasserionisierungsanlagen, Druckminder-Vorrichtungen und dergleichen. Im Weiteren ist in dem Haustechnik-Sanitärmodul 3 ein Regenwassermanager 12 an einem Montageprofil angeordnet, der mit einer Regenwasser-Zisterne, einem Brunnen oder einem sonstigen Wasserspeicher, einem Brauchwasserkreislauf und dem Kaltwasserkreislauf verbunden ist. Der Regenwassermanager 12 sorgt dafür, dass in dem Brauchwasserkreislauf stets Wasser zur Verfügung steht, das vorrangig dem Wasserspeicher und nur bei einem Wassermangel in Wasserspeicher dem Kaltwasserkreislauf entnommen wird. Zur Entnahme von Wasser aus dem Wasserspeicher kann der Regenwassermanager 12 eine Pumpe 13 umfassen, wobei der Regenwassermanager 12 und/oder die Pumpe 13 zur Steuerung mit dem Steuerungsmodul 9 und/oder dem Bedienmodul koppelbar sind.

Zur Warmwasserversorgung mehrerer Heizkreisläufe, auch auf unterschiedlichem Temperaturniveau, sind in dem Haustechnik-Sanitärmodul 3 zwei Heizkreisanschlüsse 14 angeordnet, die selbstverständlich mehrere steuerbare Ventile zur Regelung des Durchflusses anhand eingestellter Temperaturen umfassen, wobei die Ventile mit dem Steuerungsmodul 9 und/oder dem Bedienmodul koppelbar sind, um Soll-Schalttemperaturen einzustellen und Ist-Temperaturen abzulesen.

Im Weiteren umfasst das Haustechnik-Sanitärmodul 2 Anschlüsse zu Kopplung eines Sonnenkollektors mit einem an einem Montageprofil 5 angeordneten Solarmodul 15, das mit dem Warmwasserspeicher 8 des Haustechnik-Heizungsmodul 2 verbunden ist. Zur Bereitstellung von temperatur- bzw. leistungsabhängigen Informationen ist das Solarmodul mit dem Steuerungsmodul 9 und/oder dem Bedienmodul verbindbar.

Schließlich sind ein Zulauf 16 zum Anschluss einer Waschmaschine und ein Ablauf 17, mit dem ein Abwasserschlauch einer Waschmaschine und/oder eines Wäschetrockners verbindbar ist, in dem Haustechnik-Sanitärmodul 3 angeordnet.

Zur Realisierung einer kontrollierten Wohnraumbe- und -entlüftung ohne die Anordnung von entsprechenden Komponenten, wie Lüfter, Wärmetauscher oder dergleichen, außerhalb der Haustechnikzentrale ist eine Vorrichtung 18 zur Wohnraumlüftung an einem zugeordneten Montageprofil 5 innerhalb des Haustechnik-Sanitärmoduls 3 angeordnet. In Abhängigkeit von der Größe der Vorrichtung und dem Platzangebot des Haustechnik-Sanitärmoduls 3 ist es möglich, entweder die Vorrichtung 18 zur Wohnraumlüftung mit dem umfassten Lüfter 21 zusätzlich oder alternativ zu dem Regenwassermanager 12 zu installieren. Die Vorrichtung 18 zur Wohnraumlüftung umfasst mindestens einen von einem Abluft-Strom und einem Zuluft-Strom durchströmten Wärmetauscher 19. Selbstverständlich können weitere Wärmetauscher, insbesondere zur Übertragung von Wärme eines Warmwasserkreislaufs oder eines Kaltwasserkreislaufs oder eines Brauchwasserkreislaufs des Regenwassermanagers an einen Zuluft- oder Umluft-Strom zur Heizung oder Kühlung der Luft und damit des Gebäudes vorgesehen sein.

Damit eine Wärmemenge zur Erwärmung von Warmwasser und/oder Heizungswasser zu ermitteln ist, sind Wärmemengenzähler 20 innerhalb des Haustechnik-Sanitärmoduls 3 sowohl entsprechenden Warmwasserleitungen als auch den Heizkreisanschlüssen 14 zugeordnet, wobei die Wärmemengenzähler 20 entweder unmittelbar Ableseeinrichtungen umfassen, die aus dem Stand der Technik bekannt sind, oder eine Datenübertragung über eine Schnittstelle mit einer zentralen Abrechnungsstelle und/oder dem Steuerungsmodul 9 und/oder dem mit den Steuerungsmodul 9 gekoppelten Bedienmodul erfolgt.

Sämtliche Komponenten des Haustechnik-Heizungsmoduls 2 und des Haustechnik-Sanitärmoduls 3 werden werkseitig vormontiert, so dass baustellenseitig nur noch die Anschlüsse zum Gebäude herzustellen sind. Hierdurch ist zum einen eine schnelle Installation vor Ort mit einer relativ geringen Anzahl möglicher Fehlerquellen möglich und zum anderen ist die gesamte Hausinstallation sauber untergebracht und es sind keine separaten Technik- oder Hausanschlussräume erforderlich.

### Bezugszeichen

- 1.: Haustechnikzentrale
- 2.: Haustechnik-Heizungsmodul
- 3.: Haustechnik-Sanitärmodul
- 4.: Eckprofil
- 5.: Montageprofil
- 6.: Verkleidungselement
- 7.: Wärmequelle
- 8.: Warmwasserspeicher
- 9.: Steuerungsmodul
- 10.: Anschluss
- 11.: Wasserzähler
- 12.: Regenwassermanager
- 13.: Pumpe
- 14.: Heizkreisanschluss
- 15.: Solarmodul
- 16.: Zulauf
- 17.: Ablauf
- 18.: Vorrichtung
- 19.: Wärmetauscher
- 20.: Wärmemengenzähler
- 21.: Lüfter

## Patentansprüche

1. Haustechnikzentrale, die mindestens jeweils ein vorgefertigtes Haustechnik-Heizungsmodul (2) und ein Haustechnik-Sanitärmodul (3) umfasst, das jeweils aus Eckprofilen (4) und horizontalen Montageprofilen (5), die mindestens zwei der Eckprofile (4) miteinander verbinden, sowie umfangsseitigen Verkleidungselementen (6) zusammengesetzt ist, wobei die Eckprofile (4) jeweils endseitig mit Befestigungselementen zur Festlegung auf einem Boden und an einer Decke eines Gebäudes bestückt sind, wobei die Eckprofile (4) und/oder die Befestigungselemente zur Längenänderung teleskopierbar und die Verkleidungselemente (6) entweder teleskopierbar oder in ihrer Höhenlage veränderbar angeordnet sind und wobei mindestens eines der Montageprofile (5) mit einer Vorrichtung (18) zur Wohnraumlüftung bestückt ist, wobei die Haustechnikzentrale eine Wärmequelle umfasst,
**dadurch gekennzeichnet, dass** das mindestens eine der Montageprofile (5) mit einem Regenwassermanager (12), der mindestens zwei Einlässe und mindestens einen Auslass aufweist, bestückt ist, dass die Haustechnikzentrale eine Zisterne für Regenwasser umfasst, und dass
die Vorrichtung (18) zur Wohnraumlüftung einen von einem Wasser-Strom und dem Zuluft-Strom durchströmten Wärmetauscher (19) umfasst, wobei der Wasser-Strom zur Erwärmung der Zuluft mit der Wärmequelle und zur Kühlung der Zuluft mit dem Regenwassermanager und dem Regenwasser der Zisterne gekoppelt ist.

2. Haustechnikzentrale nach Anspruch 1, **dadurch gekennzeichnet, dass** das der Decke des Gebäudes zugeordnete Verkleidungselement (6) ein Deckenanschlusselement umfasst.

3. Haustechnikzentrale nach Anspruch 1 oder 2, **dadurch gekennzeichnet, dass** zumindest einzelne Verkleidungselemente (6) von den zugeordneten Eckprofilen (4) lösbar sind und/oder eine Klappe aufweisen, um eine Wartungsöffnung bereitzustellen.

4. Haustechnikzentrale nach Anspruch 1, **dadurch gekennzeichnet, dass** die Vorrichtung (18) zur Wohnraumlüftung mindestens einen Lüfter (21) und mindestens einen von einem Abluft-Strom und einem Zuluft-Strom durchströmten Wärmetauscher (19) umfasst.

5. Haustechnikzentrale nach Anspruch 1, **dadurch gekennzeichnet, dass** das Haustechnik-Sanitärmodul (3) mindestens einen Zulauf (16) zum Anschluss einer Waschmaschine und einen Ablauf (17) zum Anschluss einer Waschmaschine und/oder eines Wäschetrockners aufweist.

6. Haustechnikzentrale nach Anspruch 1 oder 2, **dadurch gekennzeichnet, dass** das Haustechnik-Sanitärmodul (3) mit dem Haustechnik-Heizungsmodul (2) gekoppelt ist, in dem ein mit mindestens einer Wärmequelle (7) verbundener Warmwasserspeicher (8) anordenbar ist, der mit mindestens einem Wasseranschluss des Haustechnik-Sanitärmoduls (3) zu verbinden ist.

7. Haustechnikzentrale nach Anspruch 1, **dadurch gekennzeichnet, dass** das Haustechnik-Heizungsmodul (2) ein rechnergestütztes Steuerungsmodul (9) umfasst, das mit der Wärmequelle (7) zusammenwirkt, wobei das Steuerungsmodul (9) mit mindestens einem außerhalb des Haustechnik- Heizungsmoduls (2) angeordneten Bedienmodul gekoppelt ist.

8. Haustechnikzentrale nach Anspruch 7, **dadurch gekennzeichnet, dass** das Bedienmodul als ein Tablet-Computer, Smartphone oder dergleichen ausgebildet ist und über eine Drahtlosschnittstelle mit dem Steuerungsmodul kommuniziert.

9. Haustechnikzentrale nach einem der Ansprüche 1 bis 8, **dadurch gekennzeichnet, dass** das Haustechnik-Sanitärmodul (3) mehrere mit Warmwasserleitungen verbundene Wärmemengenzähler (20) umfasst.

10. Haustechnikzentrale nach Anspruch 9, **dadurch gekennzeichnet, dass** die Wärmemengenzähler (20) unmittelbar ablesbar oder zur Fernablesung über das Internet oder zur Ablesung an dem Steuerungsmodul (9) und/oder dem Bedienmodul ausgebildet sind.

11. Haustechnikzentrale nach einem der Ansprüche 1 bis 9, **dadurch gekennzeichnet, dass** das Haustechnik-Sanitärmodul (3) mehrere Heizkreisanschlüsse (14), aufweist, die zum einen mit der Wärmequelle (7) und zum anderen mit Heizungselementen verbindbar sind.

12. Haustechnikzentrale nach Anspruch 11, **dadurch gekennzeichnet, dass** die Heizkreisanschlüsse (14) separat regelbar sind.

13. Haustechnikzentrale nach einem der Ansprüche 1 bis 12, **dadurch gekennzeichnet, dass** die Heizkreisanschlüsse (14) temperaturgesteuerte Ventile umfassen, an denen eine Soll-Schalttemperatur einstellbar ist, wobei die Soll-Schalttemperatur an dem mit den Ventilen gekoppelten Bedienmodul einstellbar ist.

14. Haustechnikzentrale nach einem der Ansprüche 1 bis 13, **dadurch gekennzeichnet, dass** das Haustechnik-Sanitärmodul (3) Anschlüsse zu Kopplung eines Sonnenkollektors mit einem Solarmodul (15) und dem Warmwasserspeicher (8) umfasst, wobei das Solarmodul (15) mit dem Bedienmodul koppelbar ist.

## Claims

1. Central domestic services installation, which comprises at least one prefabricated domestic services heating module (2) and one domestic services plumbing module (3) in each case, which module consists in each case of corner profiles (4) and horizontal mounting profiles (5) which interconnect at least two of the corner profiles (4), and peripheral cladding elements (6), the corner profiles (4) each being equipped at the end with fastening elements for fixing to a floor and to a ceiling of a building, the corner profiles (4) and/or the fastening elements being arranged telescopically for a change in length, and the cladding elements (6) being arranged either telescopically or so as to be variable in their vertical position, and at least one of the mounting profiles (5) being equipped with a device (18) for domestic ventilation, the central domestic services installation comprising a heat source, **characterized in that** the at least one of the mounting profiles (5) is equipped with a rainwater manager (12) which has at least two inlets and at least one outlet, **in that** the central domestic services installation has a cistern for rainwater, and **in that** the device (18) for domestic ventilation comprises a heat exchanger through which a water flow and the supply air flow (19) flows, the water flow being coupled to the heat source in order to heat the supply air and being coupled to the rain water manager and the rain water from the cistern in order to cool the supply air.

2. Central domestic services installation according to claim 1, **characterized in that** the cladding element (6) associated with the ceiling of the building comprises a ceiling connection element.

3. Central domestic services installation according to either claim 1 or claim 2, **characterized in that** at least individual cladding elements (6) can be detached from the associated corner profiles (4) and/or have a flap in order to provide a maintenance opening.

4. Central domestic services installation according to claim 1, **characterized in that** the device (18) for domestic ventilation comprises at least one fan (21) and at least one heat exchanger (19) through which an exhaust air flow and a supply air flow flows.

5. Central domestic services installation according to claim 1, **characterized in that** the domestic services plumbing module (3) has at least one inlet (16) for connecting a washing machine and one outlet (17) for connecting a washing machine and/or a tumble dryer.

6. Central domestic services installation according to either claim 1 or claim 2, **characterized in that** the domestic services plumbing module (3) is coupled to the domestic services heating module (2), in which a hot water tank (8) connected to at least one heat source (7) can be arranged, which tank is to be connected to at least one water connection of the domestic services plumbing module (3).

7. Central domestic services installation according to claim 1, **characterized in that** the domestic services heating module (2) comprises a computer-based control module (9) which interacts with the heat source (7), the control module (9) being coupled to at least one operating module that is arranged outside the domestic services heating module (2).

8. Central domestic services installation according to claim 7, **characterized in that** the operating module is designed as a tablet computer, smart phone or the like and communicates with the control module via a wireless interface.

9. Central domestic services installation according to any of claims 1 to 8, **characterized in that** the domestic services plumbing module (3) comprises a plurality of heat meters (20) connected to hot water pipes.

10. Central domestic services installation according to claim 9, **characterized in that** the heat meters (20) are designed so that they can be read directly or read remotely via the Internet or read on the control module (9) and/or on the operating module.

11. Central domestic services installation according to any of claims 1 to 9, **characterized in that** the domestic services plumbing module (3) has a plurality of heating circuit connections (14) which can be connected to the heat source (7) and to heating elements.

12. Central domestic services installation according to claim 11, **characterized in that** the heating circuit connections (14) can be controlled separately.

13. Central domestic services installation according to any of claims 1 to 12, **characterized in that** the heating circuit connections (14) comprise temperature-controlled valves at which a target circuit temperature can be set, it being possible for the target circuit temperature to be set at the operating module that is coupled to the valves.

14. Central domestic services installation according to any of claims 1 to 13, **characterized in that** the domestic services plumbing module (3) has connections for coupling a solar panel to a solar module (15) and to the hot water tank (8), it being possible for the solar module (15) to be coupled to the operating module.

## Revendications

1. Centre domotique comprenant au moins un module de chauffage domotique (2) préfabriqué et un module sanitaire domotique (3) qui se compose respectivement de profilés d'angle (4) et de profilés de montage (5) horizontaux reliant entre eux au moins deux des profilés d'angle (4), ainsi que des éléments périphériques d'habillage (6), dans lequel les profilés d'angle (4) sont équipés chacun aux extrémités d'éléments de fixation destinés à être fixés sur un sol et sur un plafond d'un bâtiment, les profilés d'angle (4) et/ou les éléments de fixation étant télescopiques pour modifier la longueur et les éléments d'habillage (6) étant disposés soit de manière télescopique soit de manière variable en hauteur et au moins un des profils de montage (5) étant équipé d'un dispositif (18) pour la ventilation de locaux d'habitation, le centre domotique du bâtiment comprenant une source de chaleur, **caractérisé en ce que** l'au moins l'un des profilés de montage (5) est équipé d'un gestionnaire d'eau de pluie (12) qui comporte au moins deux entrées et au moins une sortie, **en ce que** le centre domotique du bâtiment comprend une citerne à eau de pluie, et **en ce que** le dispositif (18) de ventilation de locaux d'habitation comprend un échangeur de chaleur (19) à travers lequel s'écoulent un courant d'eau et le courant d'air d'alimentation, le courant d'eau étant couplé à la source de chaleur pour chauffer l'air d'alimentation et au gestionnaire d'eau de pluie et à l'eau de pluie du réservoir de stockage pour refroidir l'air d'alimentation.

2. Centre domotique selon la revendication 1, **caractérisé en ce que** l'élément d'habillage (6) associé au plafond du bâtiment comprend un élément de liaison au plafond.

3. Centre domotique selon la revendication 1 ou 2, **caractérisé en ce qu'au** moins des éléments d'habillage (6) individuels peuvent être détachés des profilés d'angle (4) correspondants et/ou comportent un volet pour créer une ouverture de maintenance.

4. Centre domotique selon la revendication 1, **caractérisé en ce que** le dispositif (18) de ventilation de locaux d'habitation comprend au moins un ventilateur (21) et au moins un échangeur de chaleur (19) à travers lequel passent un flux d'air aspiré et un flux d'air évacué.

5. Centre domotique selon la revendication 1, **caractérisé en ce que** le module sanitaire domotique (3) présente au moins une entrée (16) pour raccorder une machine à laver et une sortie (17) pour raccorder une machine à laver et/ou un sèche-linge.

6. Centre domotique selon la revendication 1 ou 2, **caractérisé en ce que** le module sanitaire domotique (3) est couplé au module de chauffage domotique (2) dans lequel un réservoir d'eau chaude (8) relié à au moins une source de chaleur (7) peut être disposé et qui doit être relié à au moins une alimentation en eau du module sanitaire domotique (3).

7. Centre domotique selon la revendication 1, **caractérisé en ce que** le module de chauffage domotique (2) comprend un module de commande (9) assisté par ordinateur qui interagit avec la source de chaleur (7), le module de commande (9) étant couplé à au moins un module de commande disposé à l'extérieur du module de chauffage domotique (2).

8. Centre domotique selon la revendication 7, **caractérisé en ce que** le module de commande est conçu comme une tablette informatique, un smartphone ou tout autre appareil similaire et communique avec le module de commande via une interface sans fil.

9. Centre domotique selon l'une quelconque des revendications 1 à 8, **caractérisé en ce que** le module sanitaire domestique (3) comprend une pluralité de conduites d'eau chaude raccordées à un compteur de chaleur (20).

10. Centre domotique selon la revendication 9, **caractérisé en ce que** les compteurs de chaleur (20) sont directement lisibles ou conçus pour une lecture à distance via Internet ou pour une lecture sur le module de commande (9) et/ou le panneau de commande.

11. Centre domotique selon l'une quelconque des revendications 1 à 9, **caractérisé en ce que** le module sanitaire domotique (3) présente une pluralité de raccordements de circuit de chauffage (14) qui peuvent être raccordés d'une part à la source de chaleur (7) et d'autre part aux éléments chauffants.

12. Centre domotique selon la revendication 11, **caractérisé en ce que** les raccordements du circuit de chauffage (14) peuvent être ajustés séparément.

13. Centre domotique selon l'une quelconque des revendications 1 à 12, **caractérisé en ce que** les raccordements du circuit de chauffage (14) comprennent des vannes à régulation de température sur lesquelles on peut régler une température de commutation de consigne, ladite température de commutation de consigne étant réglable par le panneau de commande couplé aux vannes.

14. Centre domotique selon l'une quelconque des revendications 1 à 13, **caractérisé en ce que** le module sanitaire domotique (3) comprend des raccordements pour coupler un collecteur solaire à un module solaire (15) et au réservoir d'eau chaude (8), le module solaire (15) pouvant être couplé au module de commande.
